## Europäisches Patentamt

## European Patent Office

## Office européen des brevets

(19)

(11)  **EP 1 421 340 B1**

(12)  **EUROPÄISCHE PATENTSCHRIFT**

(45) Veröffentlichungstag und Bekanntmachung des Hinweises auf die Patenterteilung:
**20.04.2005  Patentblatt 2005/16**

(21) Anmeldenummer: 02748599.4

(22) Anmeldetag: **19.06.2002**

(51) Int Cl.$^7$: **G01D 5/347**, B62D 5/00

(86) Internationale Anmeldenummer:
**PCT/DE2002/002238**

(87) Internationale Veröffentlichungsnummer:
**WO 2003/019117 (06.03.2003 Gazette 2003/10)**

(54) **CODE (RING) MIT ZWEI PAAREN PERIODISCHER LINIENMUSTER**

CODE (RING) WITH TWO PAIRS OF PERIODIC LINE PATTERNS

CODE (ANNEAU) A DEUX PAIRES DE MOTIFS LINEAIRES PERIODIQUES

(84) Benannte Vertragsstaaten:
**DE ES FR GB IT SE**

(30) Priorität: **18.08.2001  DE 10140616**

(43) Veröffentlichungstag der Anmeldung:
**26.05.2004  Patentblatt 2004/22**

(73) Patentinhaber: **ROBERT BOSCH GMBH**
**70442 Stuttgart (DE)**

(72) Erfinder:
• **STEINLECHNER, Siegbert**
**71229 Leonberg (DE)**
• **WENZLER, Axel**
**71229 Leonberg (DE)**
• **MARX, Klaus**
**70565 Stuttgart (DE)**
• **JOST, Franz**
**70565 Stuttgart (DE)**

(56) Entgegenhaltungen:
EP-A- 1 043 571          DE-A- 4 225 319
DE-A- 19 855 064         US-A- 5 237 391

**EP 1 421 340 B1**

**Beschreibung**

Die vorliegende Erfindung betrifft ein Verfahren und eine Vorrichtung zur optischen Messdatenerfassung, insbesondere zur optischen Winkel-, Drehmoment- oder Streckenerfassung.

Sie betrifft auch einen entsprechenden Codering.

Stand der Technik

Es sind verschiedene optische Verfahren zur Winkelmessung beschrieben worden, wobei es sich in der Regel um digitale Verfahren handelt, die im Hinblick auf die Verschmutzungsund Toleranzproblematik Vorteile gegenüber analogen Messverfahren aufweisen.

Man unterscheidet zwischen inkremental und absolut messenden Verfahren. Typischerweise werden bei absolut messenden Verfahren optische Codierungen verwendet, wie beispielsweise der Cray-Code oder der Manchester-Code.

Für bestimmte Anwendungen, wie beispielsweise das sogenannte Electronic Power Steering (EPS), wird neben der Winkelinformation an einer Achse zusätzlich auch die Kenntnis eines angelegten Drehmoments gewünscht. Da eine Drehmomentmessung in relativ einfacher Weise mit Hilfe einer Torsionsstrecke auf eine Winkelmessung abgebildet werden kann, werden zur Zeit verstärkt Verfahren entwickelt, die sowohl den Winkel, als auch zusätzlich oder alternativ hierzu das Drehmoment einer Achse über eine Winkelmessung bestimmen können. Den bekannten Verfahren ist gemeinsam, dass sie die Winkel vor und nach der Torsionsstrecke sehr genau messen, um dann aus einer relativ geringen Winkeldifferenz auf das zu messende Drehmoment zu schließen.

Aus der DE-P 10042656 ist ein Verfahren zur Bestimmung eines Drehwinkels und/oder einer Winkeldifferenz aus Phasensignalen bekannt. Das Verfahren wird an einer geteilten Welle mit Phasenspuren und einem zwischengeschalteten Torsionsstab realisiert, wobei mittels zugeordneter Sensoren und einer Auswerteeinheit in Bezug auf eine Umdrehung der Welle jeweils mehrdeutige Phasensignale gewonnen werden. Zunächst werden gemäß diesem Verfahren wenigstens zwei Phasensignale zu einem Signal gewichtet aufsummiert, wobei anschließend von dem Signal ein nicht ganzzahliger Anteil gebildet wird, welcher proportional der Winkeldifferenz ist. Aus der Winkeldifferenz ist durch Multiplikation mit der Federrate des zwischengeschalteten Torsionsstabes das an der Welle angreifende Drehmoment bestimmbar.

Ein Ziel der vorliegenden Erfindung ist es, eine absolute Messdatenerfassung, insbesondere eine Winkelmessung einer Achse, beispielsweise einer Lenkachse, mit der zusätzlichen optionalen Möglichkeit, ein auf die Achse wirkendes Drehmoment zu bestimmen, in möglichst einfacher Weise zu realisieren. Ein weiteres Ziel der vorliegenden Erfindung ist es, eine Streckenmessung in möglichst einfacher Weise durchzuführen.

Diese Ziele werden erreicht durch ein Verfahren mit den Merkmalen des Patentanspruchs 1, einer Vorrichtung mit den Merkmalen des Patentanspruchs 8 sowie einem Codering nach dem Anspruch 9.

Das erfindungsgemäße Verfahren erweist sich, verglichen mit herkömmlichen Verfahren, aufgrund der unterschiedlichen regelmäßigen, periodischen Linienmuster als wesentlich toleranter gegen Schmutz und andere Beeinträchtigungen. Die Gefahr von Fehlinterpretationen beispielsweise durch Verschmutzungen auf den jeweiligen Linienmustern ist erfindungsgemäß stark reduziert. Neben einer verringerten Schmutzempfindlichkeit (beispielsweise gegenüber Wasser oder Partikeln) können gegenüber herkömmlichen Verfahren Leuchtstärkedriften der Beleuchtungsquellen über der Lebensdauer sowie Abstands- sowie Positionsabhängigkeiten des optischen Sensors in einfacher Weise kompensiert werden. Es erweist sich ferner als vorteilhaft, dass das erfindungsgemäß vorgeschlagene Verfahren eine relativ geringe Redundanz aufweist.

Die erfindungsgemäße Vorrichtung zeichnet sich dadurch aus, dass mit ihr die Durchführung des erfindungsgemäßen Verfahrens in besonders einfacher Weise durchführbar ist.

Vorteile der Erfindung

Vorteilhafte Ausgestaltungen der Erfindung sind Gegenstand der Unteransprüche.

Gemäß einer bevorzugten Ausgestaltung des erfindungsgemäßen Verfahrens umfassen die Paare von Linienmustern jeweils wenigstens einen Sinusverlauf und einen Cosinusverlauf, d. h. Verläufe, die in einer um 90° zueinander phasenverschobenen Beziehung zueinander stehen. Die rechnerische Verarbeitung bzw. In-Beziehung-Setzung derartiger periodischer Verläufe erweist sich als besonders einfach durchführbar. Vorteilhaft hierbei ist, jeweils eine Schar von Sinus- und Cosinusverläufen gleicher Periodenlänge und unterschiedlicher Amplitude zu verwenden. Bei Vorsehen regelmäßiger Abstände zwischen den Amplituden einer Anzahl von Sinusverläufen bzw. Cosinusverläufen kann so gewährleistet werden, dass die einzelnen Sinusverläufe in einer Erstreckungsrichtung senkrecht zur Haupterstreckungsrichtung der Linienmuster stets gleiche Abstände zueinander aufweisen.

Zweckmäßigerweise werden die Winkel bzw. Phasenlagen der jeweiligen Paare von Linienmustern (in Bewegungsrichtung des Bauteils) durch Arcustangensbildung des Quotienten der Phasen bzw. Periodizitäten der jeweiligen Linienmuster (in einer Richtung senkrecht zur Bewegungsrichtung des Bauteils) bestimmt. Es ergeben sich die Beziehungen

PH1 = arctan (P1/P2) bzw. arctan (F1/F2)

und

PH2 = arctan (P3/P4) bzw. arctan (F3/F4),

wobei die Winkel bzw. Phasenlagen der Linienmuster mit PH1, PH2, und die Periodizitäten mit P1 bis P4 bzw. F1 bis F4 bezeichnet sind.

Es ist bevorzugt, dass der zu bestimmende Drehwinkel unter Verwendung des Noniusprinzips aus den so ermittelten Phasenlagen PH1, PH2 bestimmt wird.

Gemäß einer besonders bevorzugten Ausführungsform des erfindungsgemäßen Verfahrens werden die Phasenlagen der jeweiligen Linienmuster senkrecht zu der Drehrichtung der Welle über periodisch sich verändernde Abstände zwischen einzelnen Linien der jeweiligen Linienmuster bestimmt. Durch die Bereitstellung mehrerer Linien in einem Linienmuster können Ungenauigkeiten, welche beispielsweise durch Verschmutzung verursacht sind, wirksam vermieden werden.

Es erweist sich hierbei als sehr vorteilhaft, wenn die benachbarten Linien der einzelnen Linienmuster auf einer (gedachten) Schnittlinie senkrecht zur Drehrichtung der Welle stets gleiche Abstände zueinander aufweisen. Hierdurch ist die rechnerische Auswertung zum Erhalt der Phasen bzw. Phasenlagen P1 bis P4, beispielsweise mittels eines Mustervergleichs oder einer Fourieranalyse, vereinfacht. Es sei angemerkt, dass die Phasen bzw. Periodizitäten hier durch die konkret vorliegenden Abstände der Linien zueinander definiert sind.

Gemäß einer weiteren bevorzugten Ausführungsform des erfindungsgemäßen Verfahrens werden die Phasen der Linienmuster senkrecht zu der Drehrichtung der Welle über sich ändernde Abstände der Linien der Linienmuster zu einer sich parallel zu der Drehrichtung erstreckenden, realen oder imaginären Referenzlinie bestimmt. Diese Vorgehensweise ermöglicht die Bereitstellung von Linienmustern mit konstanten Abständen der einzelnen Linien senkrecht zu der Drehrichtung der Welle. Die elektronische bzw. rechnerische Bestimmung der Phasenlage derartiger Muster mit bekannter Periodenlänge ist in einfacher und kostengünstiger Weise zu realisieren. Die Phasen sind hier durch den Abstand der jeweiligen Linien zu der Referenzlinie definiert.

Die Erfindung wird nun anhand der beigefügten Zeichnungen weiter beschrieben. In dieser zeigt

Fig. 1    eine perspektivische (schematisch vereinfachte) Ansicht einer ersten bevorzugten Ausführungsform der erfindungsgemäßen Vorrichtung, insbesondere zur Durchführung des erfindungsgemäßen Verfahrens,

Fig. 2    eine Projektionsansicht einer ersten bevorzugten Codespur für den Codering gemäß Fig. 1, mit der eine erste bevorzugte Ausführungsform des erfindungsgemäßen Verfahrens realisierbar ist,

Fig. 3    ein Schaubild zur Darstellung der mit einer Codespur gemäß Fig. 2 erhaltenen Phasen bzw. Periodizitäten senkrecht zu der Bewegungsrichtung der Codespur,

Fig. 4    eine Projektionsansicht einer weiteren bevorzugten Codespur für den Codering gemäß Fig. 1, mit der eine zweite bevorzugte Ausführungsform des erfindungsgemäßen Verfahrens realisierbar ist,

Fig. 5    ein Schaubild zur Darstellung der mit einer Codespur gemäß Fig. 4 erhaltenen Phasen senkrecht zu der Bewegungsrichtung der Codespur,

Fig. 6    eine Projektionsansicht einer weiteren bevorzugten Codespur für den Codering gemäß Fig. 1, mit der eine dritte bevorzugte Ausführungsform des erfindungsgemäßen Verfahrens realisierbar ist, und

Fig. 7    ein Schaubild zur Darstellung der mit einer Codespur gemäß Fig. 6 erhaltenen Phasensenkrecht zu der Bewegungsrichtung der Codespur.

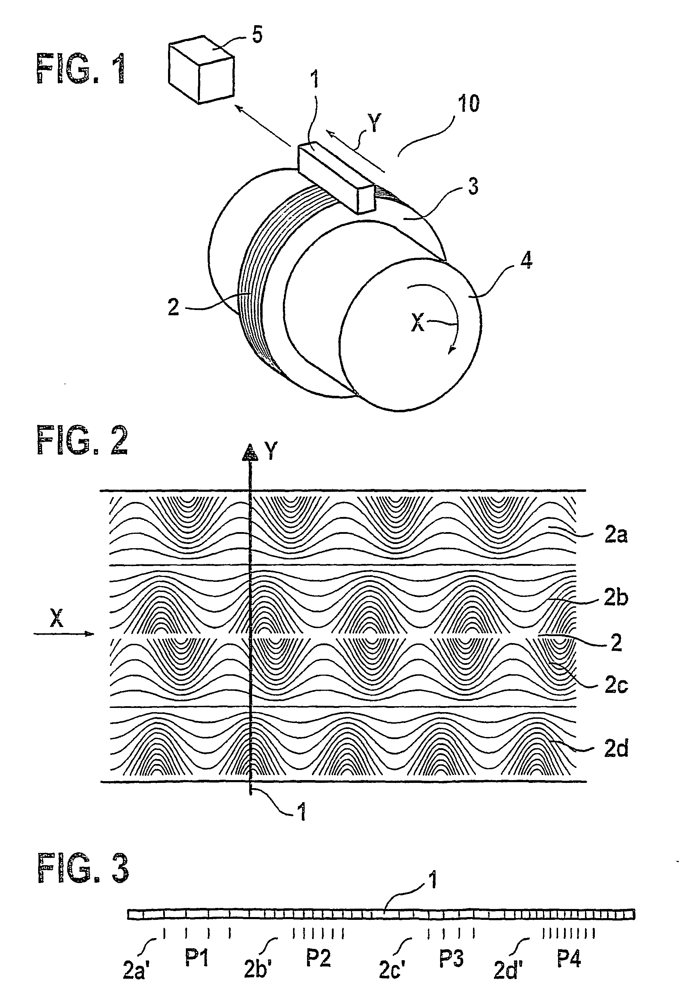

In Fig. 1 ist eine bevorzugte Ausführungsform der erfindungsgemäßen Vorrichtung insgesamt mit 10 bezeichnet. Die Vorrichtung weist einen auf einer Welle bzw. Achse, deren Winkelstellung bestimmt werden soll, aufgebrachten Codering 3 auf. Auf den Codering 3 ist beispielsweise mittels eines Laserverfahrens eine Codespur 2 aufgebracht. Die Drehrichtung der Codespur 2, welcher der Drehrichtung der Welle 4 entspricht, ist mittels des Pfeiles X verdeutlicht. Der Codering 3 ist mit der Welle 4, deren Drehwinkel Phi genau zu bestimmen ist, fest verbunden.

Die Vorrichtung weist ferner einen senkrecht zur Bewegungsrichtung der Codespur 2 orientierten, bezüglich der Wellen 4 und der Codespur 2 drehfesten Sensor, im folgenden als CCD-Zeile 1 bezeichnet, auf. Die von der CCD-Zeile 1 anhand der Codespur 2 ermittelten Informationen werden zur weiteren Verarbeitung auf einem (schematisch dargestellten) Rechner 5 gegeben.

Die Codespur ist, wie aus Fig. 2 ersichtlich, in vier Segmente 2a, 2b, 2c und 2d unterteilt, welche jeweils geschlossene, periodische Muster aufweisen, beispielsweise analoge Sinus- und Cosinusverläufe. Hierbei bilden die Segmente 2a, 2b ein erstes Linienmusterpaar, die Segmente 2c, 2d ein zweites Linienmusterpaar. Die Periodizitäten der Linienmusterpaare werden so ausgelegt, dass die Segmente 2a und 2b n Perioden über den Umfang der Codespur (Drehrichtung X über 360°) aufweisen, die Segmente 2c und 2d dagegen n+1 Perioden. Die Muster sind jeweils mehrlinig, mit der Besonderheit, dass die Abstände zwischen den Linien entlang der Abtastlinie der CCD-Zeile 1 (bzw. einer beliebigen imaginären Schnittlinie senkrecht zur Bewegungsrichtung X) konstant sind. Eine einfache Realisierung dieses Musters ist durch übereinanderliegende, in den Amplituden unterschiedliche Sinus- und Cosinusspuren gegeben, wie sie z. B. in Fig. 2 dargestellt sind.

Die CCD-Zeile 1 erfaßt in jeder Winkellage der Welle 4 vier regelmäßige, äquidistante Linienmuster 2a', 2b', 2c' und 2d'. Diese Linienmuster sind in Figur 3 dargestellt, und stellen gewissermaßen eine Momentaufnahme der Codespuren dar. Die Periodizität dieser Linienmuster kann in einer Auswerteelektronik (Rechner 5) bestimmt werden. Über eine derartige Auswertung erhält man die Periodizitätslängen bzw. Phasen P1 bis P4 senkrecht zur Drehrichtung x der Welle 4, welche den jeweiligen Momentaufnahmen der Linienmustern 2a' bis 2d' zugeordnet sind. Diese Periodizitätslängen bzw. Phasen P1 bis P4 entlang der Abtastlinie dienen anschließend als Eingangsgrößen für die absolute Winkelbestimmung. Die Periodizitätslängen lassen sich anschaulich als Abstände zwischen benachbarten Linien eines Linienmusters deuten.

Aus den Phasen P1 und P2 wird der Winkel bzw. die Phasenlage des ersten Sinus- und Cosinuspaares (des ersten Linienmusterpaares 2a, 2b) über eine einfache Arcustangens-Berechnung des Quotienten von P1 und P2 ermittelt, aus den Phasen P3 und P4 entsprechend die Phasenlage des zweiten Linienmusterpaares. Es ergeben sich die beiden Phasenwerte

$$PH1 = \arctan (P1/P2)$$

und

$$PH2 = \arctan (P3/P4).$$

Diese beiden Werte im Bereich von 0 bis $2\pi$ werden dann mit Hilfe des Noniusprinzips, beispielsweise mit dem modifizierten Noniusverfahren, wie es in der DE 195 06 938 A1 beschrieben ist, zu einem auf dem Umfang des Coderings 3 bzw. der Welle 4 eindeutigen absoluten Positionswinkel Phi des Coderings verrechnet. Es sei angemerkt, dass eine zunächst über einen Winkelbereich von 180° gegebene Eindeutigkeit auf einen Winkelbereich von 360° mittels einer Vorzeichenanalyse der Werte P1 bis P4 erweiterbar ist.

Zur Bestimmung des Positionswinkels Phi der Welle 4 wird zunächst ein Arbeitswert k aus den beiden Phasenwerten PH1 und PH2 gemäß der Gleichung

$$k = \frac{(n + 1) \cdot PH1 - n \cdot PH2}{360}$$

berechnet. Dieser Wert ist in aller Regel durch Messfehler von PH1 und PH2 nicht ganzzahlig. Aufgrund der mathematischen Beziehung zwischen PH1 und PH2 ist aber die Ganzzahligkeit des Wertes k zu fordern, so dass es sich vorliegend als zweckmäßig erweist, die nächste ganze Zahl zu k für die weitere Rechnung zu verwenden. Der Einfachheit halber wird diese nächste ganze Zahl im folgenden ebenfalls als k bezeichnet. Der Drehwinkel der Welle 4 berechnet sich nun zu

$$Phi = \frac{(n + 1) \cdot PH1 + n \cdot PH2 - (2n + 1) \cdot k \cdot 360}{2n \cdot (n + 1)}$$

Diese Beziehung zeigt deutlich die mittels des dargestellten Verfahrens gegebene Fehlerreduktion. Ein Fehler von PH1 oder PH2 überträgt sich nur im Verhältnis von etwa 1/n auf den gesuchten Winkel Phi.

Die Abweichung der realen Zahl k von der nächsten ganzen Zahl, hier ebenfalls als k bezeichnet, kann als Maß für die Zuverlässigkeit des ermittelten Messwertes Phi verwendet werden.

Mit der dargestellten Vorrichtung 10 unter Verwendung des erfindungsgemäßen Verfahrens können durch toleranzbehaftete Einbaulagen der CCD-Zeile 1 verursachte Ungenauigkeiten weitgehend automatisch korrigiert werden. Ein Versatz der CCD-Zeile in Längsrichtung (mittels Pfeil Y in Fig. 1 dargestellt) spielt keine Rolle, da lediglich Periodizitäten von regelmäßigen Mustern bestimmt werden. Eine Höhenabweichung, d.h. der Abstand des Coderings 3 von der CCD-Zeile 1, die sich in einer Vergrößerung oder Verkleinerung der Periodizitäten äußert, wird durch die Quotientenbildung eliminiert. Selbst Schräglagen der CCD-Zeile 1 sind zum einen durch Mittelungen (in diesem Fall wären die Abstände der einzelnen Linien der Linienmuster nicht mehr vollkommen konstant), zum anderen durch die Arcustangensbildung bis zu gewissen Grenzen korrigierbar.

Eine Erweiterung des dargestellten Verfahrens auf die Drehmomentmessung ist in bekannter Weise mittels eines zweiten Coderings, der über eine Torsionsstrecke drehmomentabhängig verdrehbar ist, verwirklichbar. Die erzielbaren Genauigkeiten der jeweils gemessenen Winkel lassen für zahlreiche Anwendungen eine hinreichend genaue Drehmomenterfassung zu.

Es sei angemerkt, dass mit dem dargestellten Verfahren auch in einfacher Weise eine lineare Wegmessung möglich ist. Beispielsweise kann das in Fig. 2 dargestellte Muster auf Papier gedruckt und auf eine zu messende Strecke aufgeklebt werden. Die Messung erfolgt dann mit Hilfe der gleichen oder einer ähnlichen Optik und Auswertung.

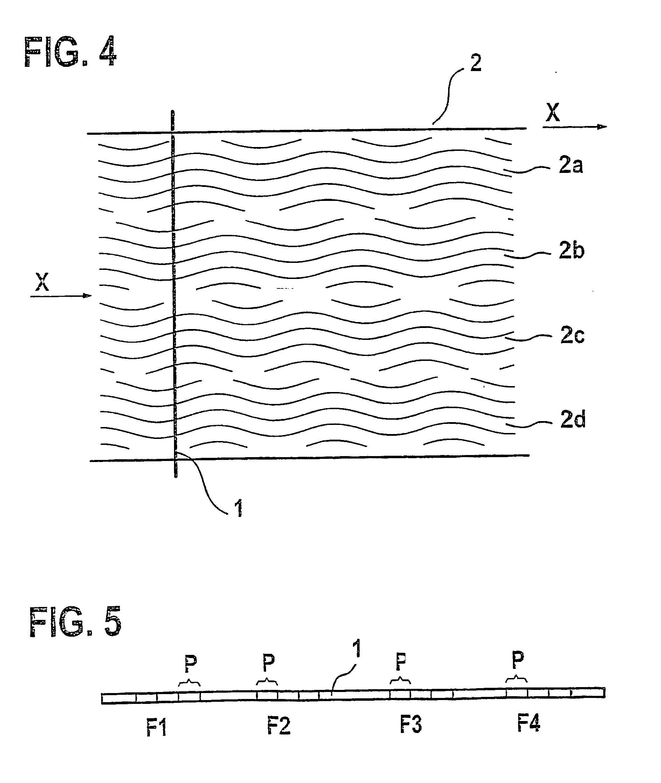

Eine weitere bevorzugte Ausführungsform des erfindungsgemäßen Verfahrens wird nun anhand der Figuren 4 und 5 erläutert. Bei der oben dargestellten ersten bevorzugten Ausführungsform des erfindungsgemäßen Verfahrens wurden aus ortsabhängigen Phasen lokale Winkelinformationen ermittelt, die dann mit Hilfe eines Noniusverfahrens zu einem Gesamtwinkel verrechnet wurden. Da zur optischen bzw. elektronischen Erkennung von unterschiedlichen bzw. veränderlichen Periodizitäten ein gewisser Hard- und Softwareaufwand erforderlich ist (beispielsweise zur Durchführung von Fouriertransformationen), wird bei der nun dargestellten zweiten Ausführungsform des erfindungsgemäßen Verfahrens die lokale Winkelinformationen aus sich zueinander verschiebenden Linienmustern mit konstanter Periodizität gewonnen. Die elektronische Bestimmung der Phasen derartiger Muster mit bekannter Periodenlänge ist in sehr einfacher und kostengünstiger Weise zu realisieren.

Die Perspektiven der Figuren 4 und 5 entsprechen denjenigen der Figuren 2 bzw. 3. Die CCD-Zeile 1 ist hierbei ebenfalls senkrecht zur Bewegungsrichtung x der Codespur 2 angeordnet. Die Codespur 2 ist in vier Segmente 2a, 2b, 2d, 2c unterteilt, die wieder jeweils geschlossene periodische Linienmuster, wie beispielsweise Sinus- und Cosinusverläufe, aufweisen. Die Periodizitäten dieser Muster werden so ausgelegt, dass die beiden ersten Segmente 2a und 2b, welche ein erstes Linienmusterpaar bilden, über den Umfang der Codespur (360°) n Perioden aufweisen, und die Segmente 2c und 2d m Perioden, beispielsweise n+1 Perioden.

Auf der CCD-Zeile 1 werden die Linienmuster als periodische Strukturen mit bekannter und fester Periode bzw. Periodizität abgebildet, wie dies in Fig. 5 dargestellt ist. Hierbei sind jedoch die Muster F1, F2, F3 und F4 in einer Phasenbeziehung zu einer gedachten Referenzlinie, d. h. einer beliebigen Linie in Richtung der Bewegungsrichtung x. Die Phasenverschiebungen unterliegen gegebenenfalls zusätzlich einer konstanten Verschiebung (Offset), die durch die Einbaugeometrie bzw. durch Toleranzen oder Spiel verursacht werden kann. Da diese konstante Verschiebung in allen vier Segmenten gleich ist, ist sie unter Berücksichtigung der Tatsache, dass die Phasenlagen F1 und F2 bzw. F3 und F4 jeweils dem Sinus und Cosinus eines gemeinsamen Winkels entsprechen müssen, in einfacher Weise berechenbar.

Die weitere Berechnung des Gesamtwinkels erfolgt dann analog zur Auswertung, wie sie bereits unter Bezugnahme auf die erste bevorzugte Ausführungsform des erfindungsgemäßen Verfahrens beschrieben wurde.

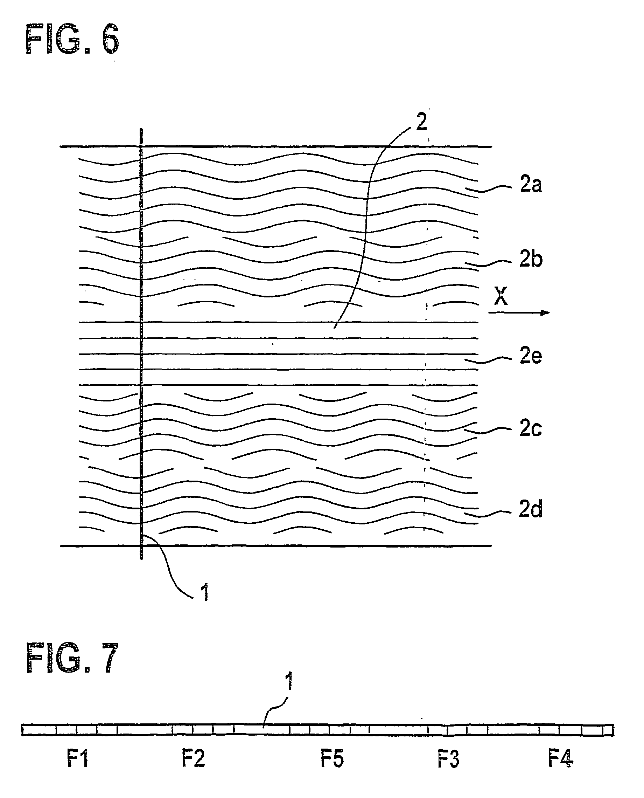

Gemäß der Ausführungsform der Codespur zur Durchführung des erfindungsgemäßen Verfahrens, wie sie in den Figuren 6 und 7 dargestellt ist, ist im Gegensatz zu dem zweiten bevorzugten Ausführungsbeispiel zusätzlich zu den Linienmustern 2a bis 2d auf einem mittleren Segment der Codespur ein weiteres Linienmuster 2e vorgesehen, das ein geradliniges konstantes Linienmuster als Referenz aufweist. Die Verwendung eines derartigen, explizit auf der Codespur realisierten Referenzmusters erweist sich bei der rechnerischen Auswertung der Phasenlagen F1 bis F4 als vorteilhaft. Beispielsweise lässt sich eine konstante Verschiebung, die durch die Einbaugeometrie oder Toleranz verursacht ist, direkt aufgrund des fünften Linienmusters 2e ermitteln, da die geraden Linien genau um diesen Betrag der konstanten Verschiebung verschoben sind.

**Patentansprüche**

1. Verfahren zur optischen Messdatenerfassung eines rotatorisch oder translatorisch beweglichen Bauteils, insbesondere zur optischen Winkel-, Drehmoment- oder Streckenerfassung, mit folgenden Schritten:

   - Bereitstellung eines ersten Paares sich in Bewegungsrichtung des Bauteils erstreckender, periodischer Linienmuster (2a, 2b), welche über den Bewegungsbereich des beweglichen Bauteils, insbesondere eine definierbare Strecke oder einen Winkelbereich, beispielsweise von 360°, jeweils n Perioden aufweisen, wobei die Linienmuster in Bewegungsrichtung des Bauteils (2a, 2b) in einer festen Phasenbeziehung zueinander stehen,
   - Bereitstellung eines zweiten Paares sich in Bewegungsrichtung des Bauteils erstreckender, periodischer Linienmuster (2c, 2d), welche über den Bewegungsbereich des beweglichen Bauteils, insbesondere eine definierbare Strecke oder einen Winkelbereich, beispielsweise von 360°, jeweils m, insbesondere n+1 Perioden aufweisen, wobei die Linienmuster in Bewegungsrichtung des Bauteils (2c, 2d) in einer festen Phasenbeziehung zueinander stehen,
   - Feststellung jeweiliger Periodizitäten bzw. Phasen (P1, P2; F1, F2) der Linienmuster des ersten Paares (2a, 2b) bezüglich eines Referenzwertes senkrecht zu der Bewegungsrichtung des Bauteils,
   - Feststellung jeweiliger Periodizitäten bzw. Phasen (P3, P4; F3, F4) der Linienmuster des zweiten Paares (2c, 2d) bezüglich eines Referenzwertes senkrecht zu der Bewegungsrichtung des Bauteils,
   - Bestimmung der Phasenlage (PH1) des ersten Paares von Linienmustern (2a, 2b) auf der Grundlage der Periodizitäten bzw. Phasen (P1, P2; F1, F2),
   - Bestimmung der Phasenlage (PH2) des zweiten Paares von Linienmustern auf der Grundlage der Periodizitäten bzw. Phasen (P3, P4. F3, F4), und

- Bestimmung der Position des Bauteils auf der Grundlage der Phasenlagen (PH1, PH2).

2. Verfahren nach-Anspruch 1, **dadurch gekennzeichnet, dass** die Linienmuster (2a, 2b; 2c, 2d) jeweils wenigstens einen Sinus- und einen Cosinusverlauf, insbesondere eine Anzahl von Sinus-und Cosinusverläufen jeweils gleicher Periodenlänge und unterschiedlicher Amplitude, umfassen.

3. Verfahren nach einem der Ansprüche 1 oder 2, **dadurch gekennzeichnet, dass** die Phasenlagen (PH1, PH2) entsprechend Gleichungen der Form

$$PH1 = \arctan (P1/P2) \text{ bzw. } \arctan F1/F2$$

und

$$PH2 = \arctan (P3/P4) \text{ bzw. } \arctan F3/F4$$

berechnet werden.

4. Verfahren nach einem der vorstehenden Ansprüche, **dadurch gekennzeichnet, dass** ein Drehwinkel einer Welle (4) unter Verwendung des Noniusprinzips aus den Phasenlagen (PH1, PH2) bestimmt wird.

5. Verfahren nach einem der vorstehenden Ansprüche, **dadurch gekennzeichnet, dass** die Periodizitäten bzw. Phasen (P1, P2, P3, P4) der Linienmuster senkrecht zu der Drehrichtung einer Welle über periodisch sich verändernde Abstände zwischen einzelnen Linien der jeweiligen Linienmuster (2a, 2b, 2c, 2d) bestimmt werden.

6. Verfahren nach Anspruch 5, **dadurch gekennzeichnet, dass** benachbarte Linien der einzelnen Linienmuster (2a, 2b, 2c, 2d) auf einer Schnittlinie senkrecht zu der Drehrichtung der Welle stets gleiche Abstände zueinander aufweisen.

7. Verfahren nach einem der vorstehenden Ansprüche 1 bis 4, **dadurch gekennzeichnet, dass** die Phasen (F1, F2, F3, F4) der Linienmuster senkrecht zu der Drehrichtung einer Welle (4) über sich ändernde Abstände der Linien der Linienmuster zu einer sich geradlinig in Drehrichtung erstreckenden, realen oder imaginären Referenzlinie bzw. Referenzlinienmuster (2e) bestimmt werden, wobei die einzelnen Linien der Linienmuster in Bewegungsrichtung des Bauteils stets konstante Abstände zueinander aufweisen.

8. Vorrichtung zur optischen Messdatenerfassung eines rotatorisch oder translatorisch beweglichen Bauteils (4), insbesondere zur optischen Winkel-, Drehmoment- oder Streckenerfassung, gemäß dem Verfahren nach einem der vorstehenden Ansprüche mit einer auf das bewegliche Bauteil aufgebrachten Codespur (2), welche wenigstens zwei Paare periodischer Linienmuster (2a, 2b, 2c, 2d) umfasst, einem Sensor (1) zur optischen Detektierung der Linienmuster, und einer Recheneinrichtung (5) zur Berechnung einer Position des Bauteils (4) auf der Grundlage der mittels des Sensors (1) erfassten Linienmuster und aus diesen abgeleiteter Periodizitäten bzw. Phasen.

9. Codering zur Verwendung in dem Verfahren nach einem der vorstehenden Ansprüche 1 bis 7 oder der Vorrichtung nach Anspruch 8, **gekennzeichnet durch** wenigstens zwei Paar periodischer Linienmuster (2a, 2b, 2c, 2d), wobei ein erstes Paar über den Umfang des Coderings n, und das zweite Paar über den Umfang des Coderings m, insbesondere n+1 Perioden aufweist, und die Linienmuster der jeweiligen Paare in einer festen Phasenbeziehung zueinander stehen.

**Claims**

1. Method for optically detecting measured data of a component moving in a rotatory or translatory fashion, in particular for optically detecting angle, torque or distance, having the following steps:

- providing a first pair of periodic line patterns (2a, 2b) which extend in the direction of movement of the component and in each case exhibit n periods over the area of movement of the moving component, in particular a definable distance or an angular range for example of 360°, the line patterns being in a fixed phase relationship to one another in the direction of movement of the component (2a, 2b),
- providing a second pair of periodic line patterns (2c, 2d) which extend in the direction of movement of the component and in each case exhibit m, in particular n+1 periods over the area of movement of the moving component, in particular a definable distance or an angular range, for example of 360°C, the line patterns being in a fixed phase relationship to one another in the direction of movement of the component (2c, 2d),
- ascertaining respective periodicities and phases (P1, P2; F1, F2) of the line patterns of the first pair (2a, 2b) with reference to a reference value perpendicular to the direction of movement of the component,
- ascertaining respective periodicities and phases (P3, P4; F3, F4) of the line patterns of the second pair (2c, 2d) with reference to a reference value perpendicular to the direction of movement of the component,

-    determining the phase relationship (PH1) of the first pair of line patterns (2a, 2b) on the basis of the periodicities and phases (P1, P2; F1, F2),

-    determining the phase relationship (PH2) of the second pair of line patterns on the basis of the periodicities and phases (P3, P4; F3, F4), and

-    determining the position of the component on the basis of the phase relationships (PH1, PH2).

2. Method according to Claim 1, **characterized in that** the line patterns (2a, 2b; 2c, 2d) in each case comprise at least one sinusoidal profile and one cosinusoidal profile, in particular a number of sinusoidal profiles and cosinusoidal profiles of in each case the same period and different amplitude.

3. Method according to one of Claims 1 or 2, **characterized in that** the phase relationships (PH1, PH2) are calculated in accordance with equations of the form

$$PH1 - \arctan(P1/P2) \text{ and } \arctan F1/F2,$$

respectively

and

$$PH2 - \arctan(P3/P4) \text{ and } \arctan F3/F4$$

respectively.

4. Method according to one of the preceding claims, **characterized in that** a rotation angle of a shaft (4) is determined from the phase relationships (PH1, PH2) by using the vernier principle.

5. Method according to one of the preceding claims, **characterized in that** the periodicities and phases (P1, P2, P3, P4) of the line patterns perpendicular to the direction of rotation of a shaft are determined via periodically varying distances between individual lines of the respective line patterns (2a, 2b, 2c, 2d).

6. Method according to Claim 5, **characterized in that** adjacent lines of the individual line patterns (2a, 2b, 2c, 2d) always exhibit equal distances from one another on a line of a dissection perpendicular to the direction of rotation of the shaft.

7. Method according to one of the preceding Claims 1 to 4, **characterized in that** the phases (F1, F2, F3, F4) of the line patterns perpendicular to the direction of rotation of a shaft (4) are determined via changing distances of the lines of the line patterns from a real or imaginary reference line or reference line pattern (2e). extending rectilinearly in the direction of rotation, the individual lines of the line patterns always exhibiting constant distances from one another in the direction of movement of the component.

8. Device for optically detecting measured data of a component (4) moving in a rotatory or translatory fashion, in particular for optically detecting angles, torques or distances, in accordance with the method according to one of the preceding claims, having a code trace (2) which is applied to the moving component and comprises at least two pairs of periodic line patterns (2a, 2b, 2c, 2d), a sensor (1) for optically detecting the line patterns, and an arithmetic logic unit (5) for calculating a position of the component (4) on the basis of the line patterns detected by means of the sensor (1), and from these derived periodicities and phases.

9. Coding for use in the method according to one of the preceding Claims 1 to 7 or the device according to Claim 8, **characterized by** at least two pairs of periodic line patterns (2a, 2b, 2c, 2d), in which a first pair exhibits n periods over the circumference of the code ring, and the second pair exhibits m, in particular n+1 periods over the circumference of the code ring, and the line patterns of the respective pairs have a fixed phase relationship to one another.

## Revendications

1. Procédé de détection optique des données de mesure d'un composant mobile en rotation ou en translation, en particulier pour la détection optique de l'angle, du couple ou de la course, comprenant les étapes suivantes :

-    mise à disposition d'une première paire de motifs linéaires périodiques (2a, 2b) s'étendant dans la direction de déplacement du composant, qui présentent sur la plage de déplacement du composant mobile, en particulier sur une course définissable ou une plage d'angle, par exemple de 360°, chacun n périodes, les motifs linéaires étant dans un rapport fixe de phases l'un par rapport à l'autre dans la direction de déplacement du composant (2a, 2b),

-    mise à disposition d'une deuxième paire de motifs linéaires périodiques (2c, 2d) s'étendant dans la direction de déplacement du composant, qui présentent sur la plage de déplacement du composant mobile, en particulier sur une course définissable ou une plage d'angle, par exemple de 360°, respectivement m, en particulier n+1 périodes, les motifs linéaires étant dans un rapport fixe de phases l'un par rapport à l'autre dans la direction de déplacement du composant (2c, 2d),

- constatation des périodicités et phases respectives (P1, P2 ; F1, F2) des motifs linéaires de la première paire (2a, 2b) par rapport à une valeur de référence perpendiculaire à la direction de déplacement du composant,
- constatation des périodicités et phases respectives (P3, P4 ; F3, F4) des motifs linéaires de la deuxième paire (2c, 2d) par rapport à une valeur de référence perpendiculaire à la direction de déplacement du composant,
- détermination de la position de phase (PH1) de la première paire de motifs linéaires (2a, 2b) sur la base des périodicités et phases (P1, P2 ; F1, F2),
- détermination de la position de phase (PH2) de la deuxième paire de motifs linéaires sur la base des périodicités et phases (P3, P4 ; F3, F4), et
- détermination de la position du composant sur la base des positions de phases (PH1, PH2).

2. Procédé selon la revendication 1, **caractérisé en ce que** les motifs linéaires (2a, 2b ; 2c, 2d) comprennent respectivement au moins une courbe de sinus et une courbe de cosinus, en particulier une pluralité de courbes de sinus et de cosinus respectivement de même longueur de période et d'amplitude différente.

3. Procédé selon l'une des revendications 1 ou 2, **caractérisé en ce que** les positions de phases (PH1, PH2) sont calculées d'après les équations de la forme

$$PH1 = \arctan (P1/P2) \text{ ou } \arctan F1/F2$$

et

$$PH2 = \arctan (P3/P4) \text{ ou } \arctan F3/F4$$

4. Procédé selon l'une quelconque des revendications précédentes, **caractérisé en ce que** l'angle de rotation d'un arbre (4) est déterminé par application du principe du vernier d'après les positions de phases (PH1, PH2).

5. Procédé selon l'une quelconque des revendications précédentes, **caractérisé en ce que** les périodicités et phases (P1, P2, P3, P4) des motifs linéaires sont déterminées perpendiculairement à la direction de rotation d'un arbre sur des distances variant périodiquement entre les diverses lignes des motifs linéaires respectifs (2a, 2b, 2c, 2d).

6. Procédé selon la revendication 5, **caractérisé en ce que** les lignes adjacentes des divers motifs linéaires (2a, 2b, 2c, 2d) présentent toujours les mêmes distances les unes par rapport aux autres sur une ligne d'intersection perpendiculaire à la direction de rotation de l'arbre.

7. Procédé selon l'une quelconque des revendications précédentes 1 à 4, **caractérisé en ce que** les phases (F1, F2, F3, F4) des motifs linéaires sont déterminées perpendiculairement à la direction de rotation d'un arbre (4) sur des distances variables des lignes des motifs linéaires par rapport à une ligne de référence réelle ou imaginaire, s'étendant en ligne droite dans la direction de rotation, ou à un motif (2e) de ligne de référence, les diverses lignes des motifs linéaires présentant toujours des distances constantes les unes par rapport aux autres dans la direction de déplacement du composant.

8. Dispositif de détection optique des données de mesure d'un composant (4) mobile en rotation ou en translation, en particulier pour la détection optique de l'angle, du couple ou de la course, selon le procédé selon l'une quelconque des revendications précédentes, comportant une piste de code (2) disposée sur le composant mobile, et qui comprend au moins deux paires de motifs linéaires périodiques (2a, 2b, 2c, 2c), un capteur (1) pour la détection optique des motifs linéaires et un dispositif de calcul (5) pour le calcul d'une position d'un composant (4) sur la base des motifs linéaires détectés au moyen du capteur (1) et ainsi que des périodicités et phases déduites de ceux-ci.

9. Code anneau pour utilisation dans le procédé selon l'une des revendications précédentes 1 à 7 ou le dispositif selon la revendication 8, **caractérisé par** au moins deux paires de motifs linéaires périodiques (2a, 2b, 2c, 2d), dont une première paire présente sur la périphérie du code anneau n périodes et dont la deuxième paire présente sur la périphérie du code anneau m, en particulier n + 1 périodes, et les motifs linéaires des paires respectives sont dans un rapport fixe de phases les uns par rapport aux autres.

FIG. 1

FIG. 2

FIG. 3

## FIG. 4

## FIG. 5

**FIG. 6**

**FIG. 7**